# EUROPEAN PATENT SPECIFICATION

(11) **EP 1 350 968 B1**
(45) Date of publication and mention of the grant of the patent: **10.01.2007**
(21) Application number: 03380056.6
(22) Date of filing: 12.03.2003
(51) Int. Cl.: F16B 37/04

(54) **Universal securing part**
Universalbefestigungteil
Partie de fixation universelle

(30) Priority: 25.03.2002 ES 200200693
(43) Date of publication of application: 08.10.2003
(73) Proprietor: Isofix, S.L., 08192 Sant Quirze Del Valles (ES)
(72) Inventor: Yanguas Llobet, David, 08192 Sant Quirze del Valles (ES)
(74) Representative: SUGRANES - VERDONCES - FERREGÜELA

(56) References cited:
- EP-A- 0 236 224
- US-A- 2 029 089
- US-A- 4 662 590
- US-A- 5 244 193

## Description

### Technical sector of the invention

The invention refers to a universal securing part, in particular to a part which is used for the securing of fixing means in guide tracks, provided with two mutually facing wings, each of which ends in a corresponding inwardly bended free edge, and which are generally assembled on walls and roofs.

### Background to the invention

Well-known in the art are different embodiments of parts for the securing of fixing means in guide tracks assembled on walls or roofs, which are generally provided with a spiral head in order to enable their assembly in any intermediate zone of the guide track without the need to insert it by one end of said guide track. This type of part, once placed in the guide track, is fixed to the latter by means of a nut, which puts frontal pressure on a washer against the guide support of the guide track.

In spite of the advantage involved in being able to directly assemble a securing part onto any area of the guide track, in many cases, fixing it is laborious and complicated, especially when it has to be assembled on a track placed in vertical position. This complication arises from the need to manually secure the securing part from the moment in which it is assembled on the guide track until the corresponding fixing means have been tightened, because otherwise, the securing part slides along the guide track by its own weight, moving from the assembly point, and with the resulting risk of it shooting out by the lower end of the guide track, which could cause physical harm and/or material damage when working high up, for example, on the facades of buildings.

Furthermore, outdoor piping is exposed to the sun, as well as other outside agents and, as a consequence of this, are subject to expansion which, in the disclosed clamps and other fixing parts, have a direct effect on their fixing means to the guide tracks that do not provide for their sliding. The expansions cause overloading on the guide track securing points, which, in many cases, quickly wear out the fixing means.

### Explanation of the invention

With the aim of providing a solution to the previously mentioned problems, a universal securing part for the securing of fixing means in guide tracks, being made up of an essentially parallelepiped-shaped main body provided with coupling means to fixing means of different types, see e.g. US-A-4 662 590 of new structure and functionality, is herein disclosed.

In essence, the universal securing part according to the invention is characterised in that said main body is provided with coupling means comprising, on each longer lateral face of the main body, at least two parallel grooves that extend along the entire length of said main body, being located in opposite positions in pairs, forming sets of grooves at different heights, wherein each set of grooves is adapted to a respective guide track of different mouth width dimension in such a way that the ribs of a guide tacks are fittable with adjustment into their corresponding set of grooves.

In accordance with an embodiment of the securing part of the present invention, the grooves of each set of grooves are situated symmetrically with respect to the main longitudinal axis of the main body, wherein the widths of the main body between the bottoms of the grooves of each set are different from one another.

It is also an embodiment of the securing part of the present invention that the widths of the main body between the bottoms of the grooves of the sets of grooves increase with the height of said sets. In accordance with another embodiment of the securing part according to the invention, the cross section of the main body has a first rectangular cross-section limited by the edges of the highest set of grooves, followed by a second trapezoidal cross-section limited by the edges of the rest of sets of grooves.

According to another embodiment of the securing part, the at least two parallel grooves on each longer lateral face of the main body are fitted with position retention means, avoiding the inertial movement of the securing part along the guide track.

According to a preferred form of embodiment of the invention, the position retention means comprise at least one protuberance arranged on at least one of the upper or lower walls of the respective grooves.

In accordance with another embodiment of the securing part according to the invention, the coupling means to the fixing means comprise, at least one orifice that goes through the main body between the two faces of greater area.

According to a preferred embodiment of the securing part, the coupling means to the fixing means also comprises a slot that determines two portions so that, when a rod is threaded into the orifice, a lateral expansion of the portions occurs which, by pressure, reinforces the position of the securing element in the guide track.

It has been envisaged that the orifice of the coupling means to the fixing means is provided with inner threading.

In accordance with one preferred form of embodiment, the lower base of the universal securing part is provided with means for blocking the head of the outer fixing means.

The earlier described features of the securing part of the invention, particularly the features relating to their coupling means to guide tracks, allow for their coupling to guide tracks of different dimensions.

Furthermore, the securing part according to the invention can be inserted by sliding into the guide track with the threaded part integral to the flange, clamp or associated analogous part, now inserted and partly threaded into the coupling means. Experts in the art will appreciate that the securing part of the invention makes it possible to perform the whole insertion operation by threading and tightening with just one hand in a simple and comfortable way, providing a solution to the technical problem posed.

The features of the universal securing element object of the present invention, in particular, the position retention means with reference to the guide track, provide the device with considerable adaptability to the expansion which tubular piping is subject to as a consequence of external agents. This adaptability stems from the characteristics of the fixing means to the guide track, which enables the securing part to move along the guide track by means of the simple application of slight pressure on the same. Thus, the securing element reacts to the expansion or contraction of the pipes, caused by the external agents, by means of a movement along the guide track, as a consequence of the pressure to which it is subject.

### Brief description of the drawings

In the sheets of drawings of this description an embodiment example of the securing part, object of the invention, is represented. In said drawings,
Fig. 1 is a perspective view of a mode of embodiment of the securing part of the invention;
Fig. 2 shows a plan view of another mode of embodiment of the invention;
Fig. 3 is a rear elevation view of the securing part of the invention;
Fig. 4 shows a longitudinal cross-section view of the securing part shown in Fig. 1;
Figs. 5 and 6 are views of the securing parts in different use positions;
Fig. 7 shows a view of the universal securing part with an external fixing part; and
Fig. 8 shows a sectioned view of the parts shown in Fig. 7 in operative position.

### Detailed description of the drawings

The description which follows refers to the previously explained drawings, which make it possible to appreciate in detail the different parts that the universal securing part, object of the invention, is composed of.

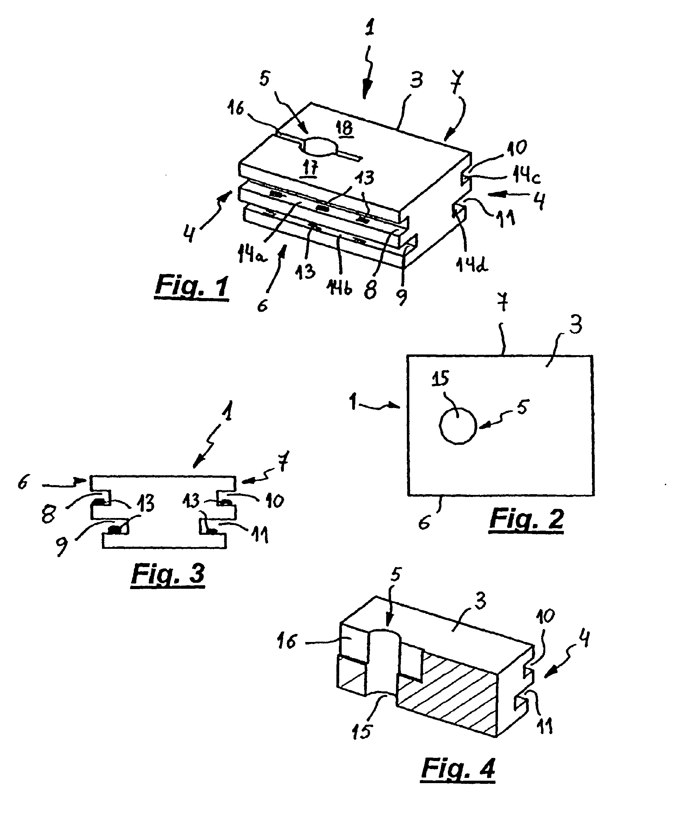

In Fig. 1 it can be appreciated that the universal securing part 1 is made up of an essentially parallelepiped-shaped main body 2 and which is provided with coupling means 3 to guide tracks 4 and with coupling means 5 to fixing means.

In Figs. 1, 3, 5 and 6 it can be observed that the coupling means 3 to guide tracks comprise, in each lateral face 6 and 7, two respective longitudinal grooves 8, 9, 10 and 11 arranged parallel in twos and situated symmetrically with respect to the main longitudinal axis of the part.

The grooves 8, 9, 10 and 11 extend along the entire length of the main body and have position retention means 12.

The position retention means 12 of the securing part 1 consist of a plurality of wave-like protuberances 13 arranged on the lower surfaces 14a, 14b, 14c and 14d of each of the respective grooves 8, 9, 10 and 11. The protuberances 13 create friction between the securing part and the guide track that retains the position of the securing part with respect to the guide track, without preventing it from being able to be moved when a specific pressure is applied to it.

Alternatively, the protuberances 13 can consist of appendages that can be arranged on the lower, upper or both surfaces.

The coupling means 5 to the fixing means comprise an orifice 15 provided with inner threading which goes through the main body between the two faces of greater area.

In the embodiment examples shown in Figs. 1 to 4, the coupling means 5 to the fixing means comprise, apart from an orifice 15, a slot 16, longitudinally arranged with respect to the securing part, which goes through the orifice 15 and extends to approximately half the height of the securing part, determining two portions 17 and 18.

The main function of the slot 16 is to consolidate the position of the securing part in the guide track by means of the expansion caused by the portions 17 and 18 when a fixing part is threaded into the orifice 15.

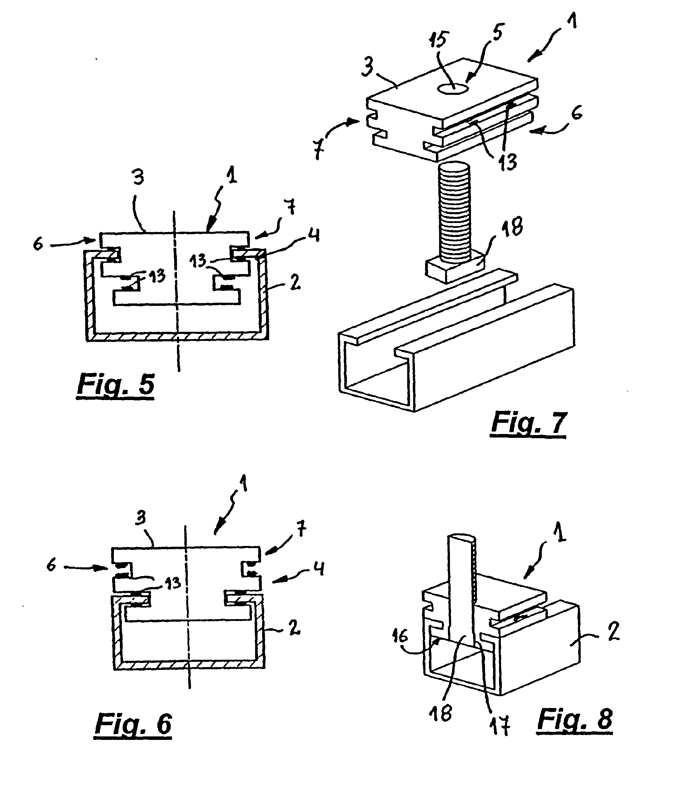

In the embodiment example shown in Figs. 6 and 7, the universal securing part is provided, on its lower base 16, with means 17 for the blocking of a head 18 of the external fixing means. In the example represented, the means 17 for the blocking of the head 18 of the external fixing means consist of a notch, adapted for receiving the head 18 and for avoiding the turning of the same on the longitudinal axis of the external fixing means.

## Claims

1. Universal securing part (1), of the type used for the securing of fixing means in guide tracks (2), being made up of an essentialy parallelepiped-shaped main body (3) provided with coupling means (5) to fixing means of different types, **characterised in that** said main body (3) is provided with coupling means (4) comprising, on each longer lateral face (6, 7) of the main body (3), at least two parallel grooves (8, 9, 10, 11) that extend along the entire length of said main body (3), being located in opposite positions in pairs, forming sets of grooves (8-10, 9-11) at different heights, wherein each set of grooves (8-10, 9-11) is adapted to a respective guide track of different mouth width dimension in such a way that the ribs of the guide tracks are fittable with adjustment into their corresponding set of grooves.

2. - Universal securing part (1), in accordance with claim 1, **characterised in that** the grooves of each set of grooves (8-10; 9-11) are situated symmetrically with respect to the main longitudinal axis of the main body (3), wherein the widths of the main body (3) between the bottoms of the grooves of each set are different from one another.

3. - Universal securing part (1), in accordance with claim 2, **characterised in that** the widths of the main body (3) between the bottoms of the grooves of the sets (8-10, 9-11) of grooves increase with the height of said sets.

4. - Universal securing part (1), in accordance with claim 3, **characterised in that** the cross-section of the main body (3) has a first rectangular cross_section limited by the edges of the highest set of grooves (8-9), followed by a second trapezoidal cross-section limited by the edges of the rest of sets of grooves (9-11).

5. - Universal securing part (1), in accordance with any of the previous claims, **characterised in that** the at least two parallel grooves (8, 9, 10, 11) on each longer lateral face of the main body (3) are fitted with position retention means (12), avoiding the inertial movement of the securing part along the guide track.

6. - Universal securing part (1), in accordance with claim 5, **characterised in that** the position retention means (12) comprise at least one protuberance (13) arranged on at least one of the upper or lower walls of the respective grooves (8, 9, 10,11).

7. - Universal securing part (1), in accordance with any of the previous claims, **characterised in that** the coupling means (5) to the fixing means comprise, at least one orifice (15) that goes through the main body between the two faces of greater area.

8. - Universal securing part (1), in accordance with claim any of the previous claims, **characterised in that** the coupling means (5) to the fixing means also comprises a slot (16) that determines two portions (17, 18) so that, when a rod is threaded into the orifice (15), a lateral expansion of the portions (17, 18) occurs which, by pressure, reinforces the position of the securing element in the guide track.

9. - Universal securing part (1), in accordance with claim 7 or 8, **characterised in that** the orifice (15) of the coupling means to the fixing means is provided with inner threading.

10. - Universal securing part (1), in accordance with any of the previous claims, **characterised in that** the lower base (16) is provided with means (17) for blocking the head (18) of the outer fixing means.

## Patentansprüche

1. Universalsicherungsteil (1) zur Sicherung von Befestigungsmitteln in Führungsschienen (2), das aus einem im Wesentlichen parallelepipedförmigen Grundkörper (3) aufgebaut ist, welcher mit Kopplungsmitteln (5) für Befestigungsmittel unterschiedlichen Typs versehen ist, **dadurch gekennzeichnet, dass** der Grundkörper (3) mit Kopplungsmitteln (4) versehen ist, die an jeder längeren Seitenfläche (6, 7) des Grundkörpers (3) wenigstens zwei sich über die gesamte Länge des Grundkörpers (3) erstreckende parallele Rillen (8, 9, 10, 11) aufweisen, von denen jeweils zwei einander gegenüberliegend angeordnet sind, um Sätze (8-10, 9-11) von Rillen auf unterschiedlichen Höhen zu bilden, wobei jeder Satz (8-10, 9-11) von Rillen an eine entsprechende Führungsschiene mit jeweils unterschiedlicher Mündungsbreitenabmessung so angepasst ist, dass die Rippen der Führungsschienen in den jeweiligen Satz von Rillen passend einsetzbar sind.

2. Universalsicherungsteil (1) nach Anspruch 1, **dadurch gekennzeichnet, dass** die Rillen jedes Satzes (8-10, 9-11) von Rillen symmetrisch bezüglich der Hauptlängsachse des Grundkörpers (3) liegen, wobei die Breiten des Grundkörpers (3) zwischen den Böden der Rillen jedes Satzes voneinander verschieden sind.

3. Universalsicherungsteil (1) nach Anspruch 2, **dadurch gekennzeichnet, dass** die Breiten des Grundkörpers (3) zwischen den Böden der Rillen der Sätze (8-10, 9-11) der Rillen mit der Höhe der Sätze ansteigen.

4. Universalsicherungsteil (1) nach Anspruch 3, **dadurch gekennzeichnet, dass** der Querschnitt des Grundkörpers (3) einen ersten rechteckigen Querschnitt aufweist, der durch die Kanten des höchsten Satzes (8-10) der Rillen begrenzt ist, gefolgt von einem zweiten trapezförmigen Querschnitt, der durch die Kanten des Rests der Sätze (9-11) von Rillen begrenzt wird.

5. Universalsicherungsteil (1) nach einem der vorstehenden Ansprüche, **dadurch gekennzeichnet, dass** die zumindest zwei parallelen Rillen (8, 9, 10, 11) an jeder längeren Seitenfläche des Grundkörpers (3) mit Positionsrückhaltemitteln (12) ausgestattet sind, welche eine Inertialbewegung des Universalsicherungsteils entlang der Führungsschiene vermeiden.

6. Universalsicherungsteil (1) nach Anspruch 5, **dadurch gekennzeichnet, dass** das Positionsrückhaltemittel (12) zumindest einen Höcker (13) umfasst, der auf zumindest einer der oberen oder unteren Wände der entsprechenden Rillen (8, 9, 10, 11) angeordnet ist.

7. Universalsicherungsteil (1) nach einem der vorstehenden Ansprüche, **dadurch gekennzeichnet, dass** das Kopplungsmittel (5) für die Befestigungsmittel zumindest eine Öffnung (15) aufweist, die durch den Grundkörper zwischen den zwei Flächen mit größerer Fläche hindurchgeht.

8. Universalsicherungsteil (1) nach einem der vorstehenden Ansprüche, **dadurch gekennzeichnet, dass** das Kopplungsmittel (5) für die Befestigungsmittel auch einen Schlitz (16) umfasst, der zwei Abschnitte (17, 18) so bestimmt, dass dann, wenn ein Stab in die Öffnung (15) eingeführt wird, eine seitliche Expansion der Abschnitte (17, 18) auftritt, so dass durch den Druck die Position des Sicherungselements in der Führungsschiene verstärkt gehalten wird.

9. Universalsicherungsteil (1) nach Anspruch 7 oder 8, **dadurch gekennzeichnet, dass** die Öffnung (15) des Kopplungsmittels für die Befestigungsmittel mit einem Innengewinde versehen ist.

10. Universalsicherungsteil (1) nach einem der vorstehenden Ansprüche, **dadurch gekennzeichnet, dass** die untere Basis (16) mit Mitteln (17) zum Blockieren des Kopfes (18) des äußeren Befestigungsmittels versehen ist.

## Revendications

1. Pièce de fixation universelle (1), du type utilisé pour la fixation des moyens de fixation dans les rails de guidage (2), étant composée d'un corps principal (3) de forme essentiellement parallélépipède doté de moyens de couplage (5) aux moyens de fixation de différents types, **caractérisée en ce que** ledit corps principal (3) est doté de moyens de couplage (4) comprenant, sur chaque face latérale plus longue (6, 7) du corps principal (3), au moins deux rainures parallèles (8, 9, 10, 11) qui s'étendent le long de toute la longueur dudit corps principal (3), étant placées dans des positions opposées par paires, formant des ensembles de rainures (8-10, 9-11) à différentes hauteurs, dans laquelle chaque ensemble de rainures (8-10, 9-11) est adapté à un rail de guidage respectif de dimension de largeur d'embouchure différente de telle sorte que les épaulements des rails de guidage puissent s'adapter par ajustement dans leur ensemble de rainures correspondant.

2. Pièce de fixation universelle (1), selon la revendication 1, **caractérisée en ce que** les rainures de chaque ensemble de rainures (8-10 ; 9-11) sont situées symétriquement par rapport à l'axe longitudinal principal du corps principal (3), dans laquelle les largeurs du corps principal (3) entre les parties inférieures des rainures de chaque ensemble sont différentes les unes des autres.

3. Pièce de fixation universelle (1), selon la revendication 2, **caractérisée en ce que** les largeurs du corps principal (3) entre les parties inférieures des rainures des ensembles (8-10, 9-11) de rainures augmentent avec la hauteur desdits ensembles.

4. Pièce de fixation universelle (1), selon la revendication 3, **caractérisée en ce que** la section transversale du corps principal (3) a une première section transversale rectangulaire limitée par les bords de l'ensemble de rainures le plus haut (8-9), suivie par une seconde section transversale trapézoïdale limitée par les bords du reste des ensembles de rainures (9-11).

5. Pièce de fixation universelle (1), selon l'une quelconque des revendications précédentes, **caractérisée en ce qu'**au moins deux rainures parallèles (8, 9, 10, 11) sur chaque face latérale plus longue du corps principal (3) sont ajustées avec des moyens de rétention de position (12), évitant le mouvement inertiel de la pièce de fixation le long du rail de guidage.

6. Pièce de fixation universelle (1), selon la revendication 5, **caractérisée en ce que** les moyens de rétention de position (12) comprennent au moins une protubérance (13) disposée sur au moins une des parois supérieures ou inférieures des rainures respectives (8, 9, 10, 11).

7. Pièce de fixation universelle (1), selon l'une quelconque des revendications précédentes, **caractérisée en ce que** les moyens de couplage (5) aux moyens de fixation comprennent, au moins un orifice (15) qui traverse le corps principal entre les deux faces de la plus grande zone.

8. Pièce de fixation universelle (1), selon l'une quelconque des revendications précédentes, **caractérisée en ce que** les moyens de couplage (5) aux moyens de fixation comprennent également une fente (16) qui détermine deux parties (17, 18) de sorte que lorsqu'une tige est insérée dans l'orifice (15), une expansion latérale des parties (17, 18) se produit qui, par pression, renforce la position de l'élément de fixation dans le rail de guidage.

9. Pièce de fixation universelle (1), selon la revendication 7 ou 8, **caractérisée en ce que** l'orifice (15) des moyens de couplage aux moyens de fixation est doté d'un filetage interne.

10. Pièce de fixation universelle (1), selon l'une quelconque des revendications précédentes, **caractérisée en ce que** la base inférieure (16) est dotée de moyens (17) pour bloquer la tête (18) des moyens de fixation externes.
